# EUROPEAN PATENT APPLICATION

(11) **EP 2 863 709 A2**
(43) Date of publication of application: **22.04.2015**
(21) Application number: 14156293.4
(22) Date of filing: 24.02.2014
(51) Int. Cl.: H05B 33/08

(54) **Power supply device and luminaire**

(30) Priority: 25.09.2013 JP 2013198382
(71) Applicant: Toshiba Lighting & Technology Corporation, Yokosuka-shi Kanagawa 237-8510 (JP)
(72) Inventor: Miura, Yohei, Kanagawa, 237-8510 (JP); Akahoshi, Hiroshi, Kanagawa, 237-8510 (JP); Kitamura, Noriyuki, Kanagawa, 237-8510 (JP); Otake, Hirokazu, Kanagawa, 237-8510 (JP); Ishikawa, Masato, Kanagawa, 237-8510 (JP); Takahashi, Yuji, Kanagawa, 237-8510 (JP)
(74) Representative: Bokinge, Ole

(57) **Abstract**

According to one embodiment, there is provided a power supply device (12, 102, 122, 126, 132, 136, 142) includes a DC-DC converter (22) and a protection circuit (24). The DC-DC converter (22) includes a switching element (40) of a normally on type, a current control element (41) of the normally on type connected to the switching element (40) in series and configured to control an electric current flowing to the switching element (40), and a rectifying element (42) connected to the current control element (41) in series. The DC-DC converter (22) converts, according to ON and OFF of the switching element (40), an input first direct-current voltage into a second-direct current voltage, which has an absolute value different from an absolute value of the first direct-current voltage, and supplies the second direct-current voltage to a load. When an electric current equal to or larger than a predetermined value flows to the switching element (40) and the current control element (41), the protection circuit (24) cuts off the electric current.

## Description

### FIELD

Embodiments described herein relate generally to a power supply device and a luminaire.

### BACKGROUND

In a luminaire, as an illumination light source, an incandescent lamp or a fluorescent lamp are replaced with a light source that consumes less energy and has long life, for example, a light-emitting element such as a light-emitting diode (LED). In a power supply device that supplies electric power to such a light source, an element of a normally on type is used as a switching element that converts electric power according to switching. Improvement of safety is desired in the power supply device including the switching element of the normally on type.

### BRIEF DESCRIPTION OF THE DRAWINGS

FIG. 1 is a circuit diagram schematically showing a luminaire according to a first embodiment;
FIG. 2 is a circuit diagram schematically showing a luminaire according to a second embodiment;
FIG. 3 is a circuit diagram schematically showing a luminaire according to a third embodiment;
FIG. 4 is a circuit diagram schematically showing a luminaire according to a fourth embodiment;
FIG. 5 is a circuit diagram schematically showing another luminaire according to the fourth embodiment;
FIG. 6 is a circuit diagram schematically showing a luminaire according to a fifth embodiment;
FIG. 7 is a graph showing an example of waveforms of an inductor current;
FIG. 8 is a circuit diagram schematically showing another luminaire according to the fifth embodiment; and
FIG. 9 is a circuit diagram schematically showing a luminaire according to a sixth embodiment.

### DETAILED DESCRIPTION

In general, according to one embodiment, there is provided a power supply device including: a DC-DC converter; and a protection circuit. The DC-DC converter includes: a switching element of a normally on type; a current control element of the normally on type connected to the switching element in series and configured to control an electric current flowing to the switching element; and a rectifying element connected to the current control element in series. The DC-DC converter converts, according to ON and OFF of the switching element, an input first direct-current voltage into a second-direct current voltage, which has an absolute value different from an absolute value of the first direct-current voltage, and supplies the second direct-current voltage to a load. When an electric current equal to or larger than a predetermined value flows to the switching element and the current control element, the protection circuit cuts off the electric current flowing to the switching element and the current control element.

According to another embodiment, there is provided a power supply device including a DC-DC converter. The DC-DC converter includes: a switching element of a normally on type; a current control element of the normally on type connected to the switching element in series and configured to control an electric current flowing to the switching element; and a rectifying element connected to the current control element in series. The DC-DC converter converts, according to ON and OFF of the switching element, an input first direct-current voltage into a second-direct current voltage, which has an absolute value different from an absolute value of the first direct-current voltage, and supplies the second direct-current voltage to a load. A saturation current value of the current control element is equal to or larger than a maximum rated current of the switching element.

According to still another embodiment, there is provided a luminaire including: a lighting load; and a power supply device configured to supply electric power to the lighting load. The power supply device includes: a DC-DC converter; and a protection circuit. The DC-DC converter includes: a switching element of a normally on type; a current control element of the normally on type connected to the switching element in series and configured to control an electric current flowing to the switching element; and a rectifying element connected to the current control element in series. The DC-DC converter converts, according to ON and OFF of the switching element, an input first direct-current voltage into a second-direct current voltage, which has an absolute value different from an absolute value of the first direct-current voltage, and supplies the second direct-current voltage to a load. When an electric current equal to or larger than a predetermined value flows to the switching element and the current control element, the protection circuit cuts off the electric current flowing to the switching element and the current control element.

According to still another embodiment, there is provided a luminaire including: a lighting load; and a power supply device configured to supply electric power to the lighting load. The power supply device includes a DC-DC converter. The DC-DC converter includes: a switching element of a normally on type; a current control element of the normally on type connected to the switching element in series and configured to control an electric current flowing to the switching element; and a rectifying element connected to the current control element in series. The DC-DC converter converts, according to ON and OFF of the switching element, an input first direct-current voltage into a second-direct current voltage, which has an absolute value different from an absolute value of the first direct-current voltage, and supplies the second direct-current voltage to a load. A saturation current value of the current control element is equal to or larger than a maximum rated current of the switching element.

Embodiments are explained below with reference to the drawings.

The drawings are schematic or conceptual. Relations between thicknesses and widths of sections, ratios of the sizes among the sections, and the like are not always the same as real ones. Even if the same sections are shown, dimensions and ratios of the sections may be shown different depending on the drawings.

In this specification and the drawings, components same as the components already shown in the drawings and explained are denoted by the same reference numerals and signs and detailed explanation of the components is omitted as appropriate.

### First Embodiment

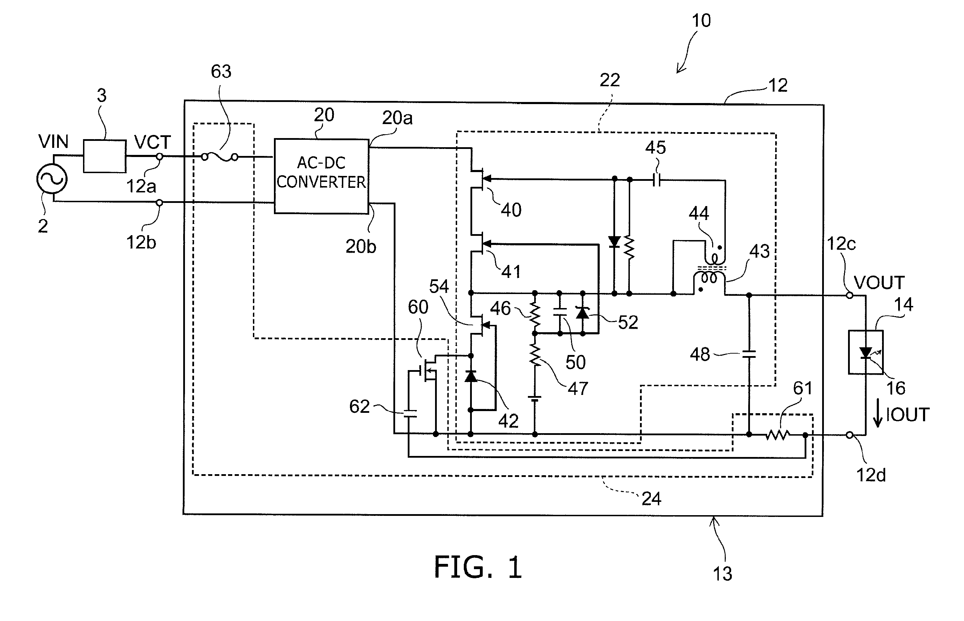

FIG. 1 is a circuit diagram schematically showing a luminaire according to a first embodiment.

As shown in FIG. 1, a luminaire 10 includes a power supply device 12 and a lighting load 14 (a load).

The power supply device 12 includes a pair of input terminals 12a and 12b and a pair of output terminals 12c and 12d. Potential set at the output terminal 12c is higher than potential set at the output terminal 12d. In the following explanation, the output terminal 12c is referred to as high-potential output terminal 12c and the output terminal 12d is referred to as low-potential output terminal 12d.

The lighting load 14 is connected between the high-potential output terminal 12c and a low-potential output terminal 12d. In this specification, "connection" means electrical connection and includes physical non-connection and connection via other components.

The lighting load 14 includes an illumination light source 16. As the illumination light source 16, for example, an LED is used or a light-emitting element having a forward drop voltage is used. The lighting load 14 lights the illumination light source 16 according to application of an output voltage VOUT and supply of an output current IOUT from the power supply device 12. The lighting load 14 can change at least one of the output voltage VOUT and the output current IOUT and perform dimming. Values of the output voltage VOUT and the output current IOUT are specified according to the illumination light source 16.

The power supply device 12 is connected to an alternating-current power supply 2 and a dimmer 3. The alternating-current power supply 2 is connected between the pair of input terminals 12a and 12b. The dimmer 3 is connected between the alternating-current power supply 2 and the input terminal 12a.

The alternating-current power supply 2 is, for example, a commercial power supply. The dimmer 3 generates an alternating-current voltage VCT subjected to conduction angle control from an alternating-current power supply voltage VIN of the alternating-current power supply 2. The power supply device 12 converts the alternating-current voltage VCT supplied from the dimmer 3 into the output voltage VOUT and outputs the output voltage VOUT to the lighting load 14 to thereby light the illumination light source 16. The power supply device 12 performs dimming of the illumination light source 16 in synchronization with the alternating-current voltage VCT subjected to the conduction angle control. The dimmer 3 is provided according to necessity and can be omitted. When the dimmer 3 is not provided, the power supply voltage VIN of the alternating-current power supply 2 is supplied to the power supply device 12. In an example explained below, the dimmer 3 is connected to the alternating-current power supply 2.

As the conduction angle control by the dimmer 3, there are a system of phase control (a leading edge type) for cutting off an alternating-current voltage immediately after a zero cross and conducting the alternating-current voltage in a specific phase and a system of antiphase control (a trailing edge type) for conducting the alternating-current voltage immediately after the zero cross and cutting off the alternating-current voltage in a specific phase.

The phase-controlling dimmer 3 has a simple circuit configuration and can handle a relatively large power load. However, when a triac is used, a light load operation is difficult. The dimmer 3 tends to fall into an unstable operation when a so-called power supply dip occurs in which a power supply voltage temporarily falls. When a capacitive load is connected to the dimmer 3, the dimmer 3 is incompatible with the capacitive load because a rush current occurs.

On the other hand, the antiphase-controlling dimmer 3 can operate even with a light load. A rush current does not occur even if a capacitive load is connected to the dimmer 3. The operation of the dimmer 3 is stable even if a power supply dip occurs. However, the dimmer 3 has a complicated circuit configuration. The temperature of the dimmer 3 tends to rise. Therefore, the dimmer 3 is not suitable for a heavy load. When an inductive load is connected to the dimmer 3, a surge occurs.

In this embodiment, as an example, the dimmer 3 is connected in series between the alternating-current power supply 2 and the input terminal 12a but another configuration may be applied.

The power supply device 12 includes an AC-DC converter 20, a DC-DC converter 22, and a protection circuit 24. The power supply device 12 includes a substrate 13. The AC-DC converter 20, the DC-DC converter 22, and the protection circuit 24 are mounted on the substrate 13. The substrate 13 includes, for example, an organic material. Heat resistant temperature of the substrate 13 is, for example, equal to or higher than 150°C.

The AC-DC converter 20 converts the alternating-current voltage VCT into a direct-current voltage. The DC-DC converter 22 generates the output voltage VOUT from the direct-current voltage supplied from the AC-DC converter 20 and supplies the output voltage VOUT to the lighting load 14. The protection circuit 24 protects the lighting load 14 from an overcurrent or heat generation involved in the overcurrent.

The AC-DC converter 20 includes, for example, a rectifying circuit and a smoothing capacitor. The rectifying circuit rectifies the alternating-current voltage VCT and generates a pulsating voltage from the alternating-current voltage VCT. For example, the rectifying circuit subjects the alternating-current voltage VCT to full-wave rectification. The smoothing capacitor smoothes the pulsating voltage rectified by the rectifying circuit and converts the pulsating voltage into a direct-current voltage. Consequently, the alternating-current voltage VCT is converted into a direct-current voltage. The AC-DC converter 20 includes a high-potential terminal 20a and a low-potential terminal 20b. The AC-DC converter 20 generates a direct-current voltage between the high-potential terminal 20a and the low-potential terminal 20b.

The DC-DC converter 22 includes, for example, a switching element 40, a current control element 41, a rectifying element 42, an inductor 43, a feedback winding 44, a coupling capacitor 45, voltage dividing resistors 46 and 47, and an output capacitor 48.

The switching element 40 and the current control element 41 are, for example, field effect transistors (FETs) or high electron mobility transistors (HEMTs) and are elements of the normally on type. The switching element 40 and the current control element 41 include, for example, a wide band gap semiconductor such as GaN or SiC. As the switching element 40 and the current control element 41, for example, wide band gap semiconductor elements are used.

A drain of the switching element 40 is connected to the high-potential terminal 20a of the AC-DC converter 20. A source of the switching element 40 is connected to a drain of the current control element 41. That is, the current control element 41 is connected to the switching element 40 in series. A current path between the drain and a source of the current control element 41 is connected to a current path between the drain and the source of the switching element 40 in series. A gate (a control terminal) of the switching element 40 is connected to one end of the feedback winding 44 via the coupling capacitor 45. A protection diode is connected to the gate of the switching element 40.

The source of the current control element 41 is connected to the lighting load 14 in series. A gate of the current control element 41 is an electrode for controlling an electric current flowing between the drain and the source of the current control element 41.

The source of the current control element 41 is connected to one end of the inductor 43 and the other end of the feedback winding 44. A voltage obtained by dividing source potential of the current control element 41 with the voltage dividing resistors 46 and 47 is input to the gate of the current control element 41. The source of the current control element 41 is connected to the lighting load 14 via the inductor 43. The voltage dividing resistor 46 is connected to the lighting load 14 in parallel. That is, a voltage obtained by dividing a voltage (a forward voltage) of the lighting load 14 with the voltage dividing resistors 46 and 47 is input to the gate of the current control element 41. Potential lower than the potential of the source is supplied to the gate of the current control element 41.

A capacitor 50 and a Zener diode 52 are connected to the voltage dividing resistor 46 in parallel. The voltage dividing resistor 46, the capacitor 50, and the Zener diode 52 function as a low-pass filter.

A time constant of the voltage dividing resistor 46 and the capacitor 50 is, for example, equal to or smaller than a half cycle of the power supply voltage VIN (the alternating-current voltage). That is, the time constant of the voltage dividing resistor 46 and the capacitor 50 is, for example, equal to or smaller than 120 Hz or equal to or larger than a cycle of a switching frequency of the switching element 40. For example, when the switching frequency of the switching element 40 is 1 MHz and the frequency of the power supply voltage VIN is 60 Hz, the time constant of the voltage dividing resistor 46 and the capacitor 50 is equal to or larger than 1 µsec and equal to or smaller than 8.3 msec. For example, the capacity of the capacitor 50 is set to satisfy the time constant.

When an increasing current flows from the one end to the other end of the inductor 43, the inductor 43 and the feedback winding 44 are magnetically coupled in polarity in which a voltage having a positive polarity is supplied to the gate of the switching element 40.

The rectifying element 42 is connected between the source of the current control element 41 and the low-potential terminal 20b with a direction from the low-potential terminal 20b to the current control element 41 set as a forward direction. As the rectifying element 42, for example, a Schottky barrier diode is used.

The other end of the inductor 43 is connected to the high-potential output terminal 12c. The low-potential terminal 20b is connected to the low-potential output terminal 12d. The output capacitor 48 is connected between the high-potential output terminal 12c and the low-potential output terminal 12d. The lighting load 14 is connected in parallel to the output capacitor 48 between the high-potential output terminal 12c and the low-potential output terminal 12d.

In this example, a semiconductor element 54 is provided between the rectifying element 42 and the source of the current control element 41. For the semiconductor element 54, for example, GaN-HEMT is used. The semiconductor element 54 includes, for example, a wide band gap semiconductor. As the semiconductor element 54, for example, a wide band gap semiconductor element is used. The semiconductor element 54 is, for example, the normally on type. A gate of the semiconductor element 54 is connected to the low-potential terminal 20b. Consequently, the semiconductor element 54 is retained in an ON state.

The protection circuit 24 includes a semiconductor element 60, a current detecting resistor 61, a capacitor 62, and a fuse 63. One end of the current detecting resistor 61 is connected to the low-potential output terminal 12d. The other end of the current detecting resistor 61 is connected to the low-potential terminal 20b. Consequently, the output current IOUT flows to the current detecting resistor 61.

A drain of the semiconductor element 60 is connected to a source of the semiconductor element 54. A source of the semiconductor element 60 is connected to the low-potential terminal 20b. A gate of the semiconductor element 60 is connected between the low-potential output terminal 12d and the current detecting resistor 61 via the capacitor 62. Consequently, a voltage corresponding to the current detecting resistor 61 and the output current IOUT is applied to the gate of the semiconductor element 60. As the semiconductor element 60, a switching element of a normally off type is used. The semiconductor element 60 is turned on when an output current IOUT equal to or larger than a predetermined value flows to the semiconductor element 60.

The fuse 63 is connected between the input terminal 12a and the AC-DC converter 20. When an electric current equal to or larger than a predetermined value flows to the switching element 40 and the current control element 41, the fuse 63 fuses an element portion and cuts off the electric current flowing to the switching element 40 and the current control element 41. More specifically, the fuse 63 cuts off the electric current flowing between the drains and the sources of the switching element 40 and the current control element 41.

As explained above, for example, when an electric current equal to or larger than the predetermined value flows to the switching element 40 and the current control element 41, the protection circuit 24 fuses the fuse 63 to thereby cut off the electric current flowing to the switching element 40 and the current control element 41.

A rated current of the fuse 63 is larger than a maximum current flowing to the switching element 40 and the current control element 41 in a state in which the semiconductor element 60 is turned off. The rated current of the fuse 63 is smaller than an electric current flowing to the switching element 40 and the current control element 41 in a state in which the semiconductor element 60 is turned on.

A position to which the fuse 63 is connected is not limited to between the input terminal 12a and the AC-DC converter 20. The fuse 63 may be connected, for example, between the high-potential terminal 20a of the AC-DC converter 20 and the drain of the switching element 40. The position to which the fuse 63 is connected may be an arbitrary position where the electric current flowing to the switching element 40 and the current control element 41 can be cut off.

The operation of the power supply device 12 is explained.

First, a dimming degree of the dimmer 3 is set to nearly 100% and the input power supply voltage VIN is substantially directly transmitted, that is, a highest direct-current voltage is input to the DC-DC converter 22.

When the power supply voltage VIN is supplied to the power supply device 12, since the switching element 40 and the current control element 41 are the elements of the normally on type, both of the switching element 40 and the current control element 41 are on. An electric current flows through a route of the switching element 40, the current control element 41, the inductor 43, and the output capacitor 48. The output capacitor 48 is charged. A voltage across both ends of the output capacitor 48, that is, a voltage between the high-potential output terminal 12c and the low-potential output terminal 12d is supplied to the illumination light source 16 of the lighting load 14 as the output voltage VOUT of the power supply device 12. Since the switching element 40 and the current control element 41 are on, a reverse voltage is applied to the rectifying element 42. An electric current substantially does not flow to the rectifying element 42.

When the output voltage VOUT reaches a predetermined voltage, the output current IOUT flows to the illumination light source 16 and the illumination light source 16 is lit. At this point, an electric current flows through a route of the switching element 40, the current control element 41, the inductor 43, the output capacitor 48, and the illumination light source 16. For example, when the illumination light source 16 is an LED, the predetermined voltage is a forward voltage of the LED and is set according to the illumination light source 16. When the illumination light source 16 is extinguished, the output current IOUT does not flow. Therefore, the output capacitor 48 retains a value of the output voltage VOUT.

A direct-current voltage input to the DC-DC converter 22 is sufficiently high compared with the output voltage VOUT. That is, a potential difference ΔV between an input and an output is sufficiently large. Therefore, an electric current flowing through the inductor 43 increases. The feedback winding 44 is magnetically couple to the inductor 43. Therefore, an electromotive force having polarity with the coupling capacitor 45 side set to high potential is induced in the feedback winding 44. Therefore, potential positive with respect to the source of the switching element 40 is supplied to the gate of the switching element 40 via the coupling capacitor 45. The switching element 40 maintains an ON state.

When an electric current flowing through the current control element 41 exceeds an upper limit value, a drain-to-source voltage of the current control element 41 suddenly rises. Therefore, a gate-to-source voltage of the switching element 40 falls below a threshold voltage and the switching element 40 is turned off. The upper limit value is a saturation current value of the current control element 41 and is specified by potential input to the gate of the current control element 41. The gate potential of the current control element 41 is set according to a direct-current voltage supplied to the voltage dividing resistors 46 and 47, a voltage of the illumination light source 16, and a voltage division ratio of the voltage dividing resistors 46 and 47. As explained above, the gate potential of the current control element 41 is the negative potential with respect to the source. Therefore, the saturation current value can be limited to a proper value.

The inductor 43 continues to feed an electric current through a route of the rectifying element 42, the output capacitor 48, and the lighting load 14. At this point, since the inductor 43 emits energy, the electric current of the inductor 43 decreases. Therefore, an electromotive force having polarity with the coupling capacitor 45 side set to low potential is induced in the feedback winding 44. Potential negative with respect to the source of the switching element 40 is supplied to the gate of the switching element 40 via the coupling capacitor 45. The switching element 40 maintains an OFF state.

When energy accumulated in the inductor 43 decreases to zero, the electric current flowing through the inductor 43 decreases to zero. The direction of the electromotive force induced in the feedback winding 44 is reversed again and an electromotive force with the coupling capacitor 45 side set to high potential is induced. Consequently, potential higher than the potential of the source is supplied to the gate of the switching element 40 and the switching element 40 is turned on again. Consequently, the power supply device 12 returns to the state in which the output voltage VOUT reaches the predetermined voltage.

Thereafter, the operation explained above is repeated. Consequently, the switching from ON to OFF of the switching element 40 is automatically repeated. The output voltage VOUT obtained by dropping the power supply voltage VIN is supplied to the illumination light source 16. That is, in the power supply device 12, the switching frequency of the switching element 40 is set by the voltage dividing resistors 46 and 47. The electric current supplied to the illumination light source 16 is a substantially fixed current, an upper limit value of which is limited by the current control element 41. Therefore, it is possible to stably light the illumination light source 16. The current control element 41 is a constant current element in other words.

As explained above, the DC-DC converter 22 converts an input first direct-current voltage into a second direct-current voltage, which has an absolute value different from an absolute value of the first direct-current voltage, according to ON and OFF of the switching element 40 and supplies the second direct-current voltage to the lighting load 14. In this example, the first direct-current voltage is a direct-current voltage supplied from the AC-DC converter 20. The second direct-current voltage is the output voltage VOUT. The first direct-current voltage input to the DC-DC converter 22 is not limited to a direct-current voltage generated by the AC-DC converter 20. For example, the first direct-current voltage may be directly supplied to the DC-DC converter 22 from an external power supply or the like.

When a dimming degree of the dimmer 3 is set to a value smaller than 100% and the input alternating-current voltage VCT is subjected to the conduction angle control and transmitted, that is, when a high direct-current voltage is input to the DC-DC converter 22, the above explanation also applies when the switching element 40 can continue oscillation. According to the dimming degree of the dimmer 3, a value of a direct-current voltage input to the DC-DC converter 22 changes and an average value of the output current IOUT can be controlled. Therefore, it is possible to dim the illumination light source 16 of the lighting load 14 according to the dimming degree.

When the dimming degree of the dimmer 3 is set to a smaller value, that is, when the direct-current voltage input to the DC-DC converter 22 is lower, since a potential difference between both ends of the inductor 43 is small even if the switching element 40 is turned on, an electric current flowing through the inductor 43 cannot increase. Therefore, the switching element 40 does not change to the OFF state and outputs a fixed direct current. That is, when the dimming degree of the dimmer 3 is small, that is, when the potential difference ΔV between an input and an output is small, the power supply device 12 operates like a series regulator.

As explained above, the power supply device 12 performs the switching operation when the potential difference ΔV is larger than a predetermined value and operates like the series regulator when the potential difference ΔV is smaller than the predetermined value. When the potential difference ΔV is large, a product of the potential difference ΔV and the electric current is large and a loss increases when the operation of the series regulator is performed. Therefore, it is suitable for a reduction in power consumption to perform the switching operation when the potential difference ΔV is large. When the potential difference ΔV is small, since a loss is small, there is no problem in operating as the series regulator.

In the power supply device 12, when the potential difference ΔV is smaller than the predetermined value, the electric current oscillates while the switching element 40 does not change to the OFF state and continues the ON state. The switching element 40 lights the illumination light source 16 of the lighting load 14 with an average value of the electric current. When potential difference ΔV is smaller, the switching element 40 outputs a direct current to the lighting load 14 and lights the illumination light source 16 while continuing the ON state. As a result, in the power supply device 12, it is possible to continuously change an output current to zero. For example, in the luminaire 10, it is possible to smoothly extinguish the illumination light source 16 of the lighting load 14.

In the power supply device 12, it is possible to continuously change, according to the potential difference ΔV, the output current IOUT from a maximum value during the switching operation of the switching element 40 to a minimum value in outputting a direct current while continuing the ON state of the switching element 40. For example, in the luminaire 10, it is possible to continuously dim the illumination light source 16 in a range of 0 to 100%.

In the power supply device 12, the switching frequency of the switching element 40 is set by dividing the voltage of the illumination light source 16 with the voltage dividing resistors 46 and 47 and inputting the divided voltage to the gate of the current control element 41. The voltage of the illumination light source 16 is stable to a certain degree even if an input voltage such as the power supply voltage VIN or the alternating-current voltage VCT is distorted. Therefore, by dividing the voltage of the illumination light source 16 with the voltage dividing resistors 46 and 47 and inputting the divided voltage to the gate of the current control element 41 as explained above, it is possible to suppress a change in the brightness of the illumination light source 16 due to the distortion of the input voltage without preparing a special control reference or the like. For example, it is possible to suppress flickering of the illumination light source 16. For example, it is possible to suppress fluctuation in the voltage of the illumination light source 16 involved in fluctuation of the input voltage.

In the power supply device 12, the capacitor 50 is connected to the voltage dividing resistor 46 to form the low-pass filter. The time constant of the voltage dividing resistor 46 and the capacitor 50 is set to, for example, equal to or smaller than the half cycle of the power supply voltage VIN. Consequently, for example, it is possible to suppress the gate potential of the current control element 41 from fluctuating according to the switching of the switching element 40. For example, even if the inductor 43 is interposed, a voltage appears in the voltage dividing resistors 46 and 47. It is possible to further stabilize the gate potential of the current control element 41. That is, it is possible to more appropriately suppress a change in the brightness of the illumination light source 16. For example, the switching frequency is increased and the capacity of the capacitor 50 is reduced. Consequently, for example, responsiveness is improved. It is possible to suppress a current ripple in a relatively wide range.

In the power supply device 12, because of breakage of the gate or the like, the switching element 40 or the current control element 41 sometimes falls into an uncontrolled state. In this case, for example, an excessively large electric current exceeding a rated current of the lighting load 14 flows to the switching element 40 and the current control element 41.

In the power supply device 12, when the excessively large output current IOUT flows, the gate potential of the semiconductor element 60 of the protection circuit 24 increases and the semiconductor element 60 is turned on. When the semiconductor element 60 is turned on, the rectifying element 42 is short-circuited. When the rectifying element 42 is short-circuited, the gate-to-source voltage of the semiconductor element 54 increases and a larger electric current flows to the switching element 40 and the current control element 41. As explained above, the rated current of the fuse 63 is smaller than an electric current flowing to the switching element 40 and the current control element 41 in a state in which the semiconductor element 60 is turned on. Consequently, when the semiconductor element 60 is turned on and a larger electric current is fed to the switching element 40 and the current control element 41, the fuse 63 is fused and the electric current flowing to the switching element 40 and the current control element 41 is cut off. That is, the output current IOUT is cut off.

In a power supply device not including the protection circuit 24, when the switching element 40 or the current control element 41 changes to the uncontrolled state, the output current IOUT equal to or larger than the rated current sometimes continues to flow to the lighting load 14. In this case, for example, the lighting load 14 is broken. In particular, when the wide band gap semiconductor elements are used as the switching element 40 and the current control element 41, temperature resistance between the drains and the sources is high compared with a Si semiconductor and the like. Therefore, even if temperature rises, the switching element 40 and the current control element 41 are not broken between the drains and the sources and an over current continues to flow. For example, the temperature of the elements exceeds the heat resistant temperature of the substrate 13 and damages the substrate 13.

On the other hand, in the power supply device 12 according to this embodiment, when an electric current equal to or larger than the predetermined value flows to the switching element 40 and the current control element 41, the fuse 63 is fused and the electric current flowing to the switching element 40 and the current control element 41 is cut off. Consequently, it is possible to suppress damage to the lighting load 14 and the substrate 13 due to the overcurrent.

As explained above, in the luminaire 10 and the power supply device 12 according to this embodiment, it is possible to suppress the damage to the lighting load 14 and the substrate 13 due to the overcurrent and improve safety.

In this example, the electric current flowing to the switching element 40 and the current control element 41 is cut off by fusing the fuse 63. Besides, for example, it is also possible to, by turning on the semiconductor element 60 and feeding a larger electric current to the switching element 40 and the current control element 41, break at least one of the switching element 40 and the current control element 41 to thereby cut of the electric current flowing to the switching element 40 and the current control element 41.

### Second Embodiment

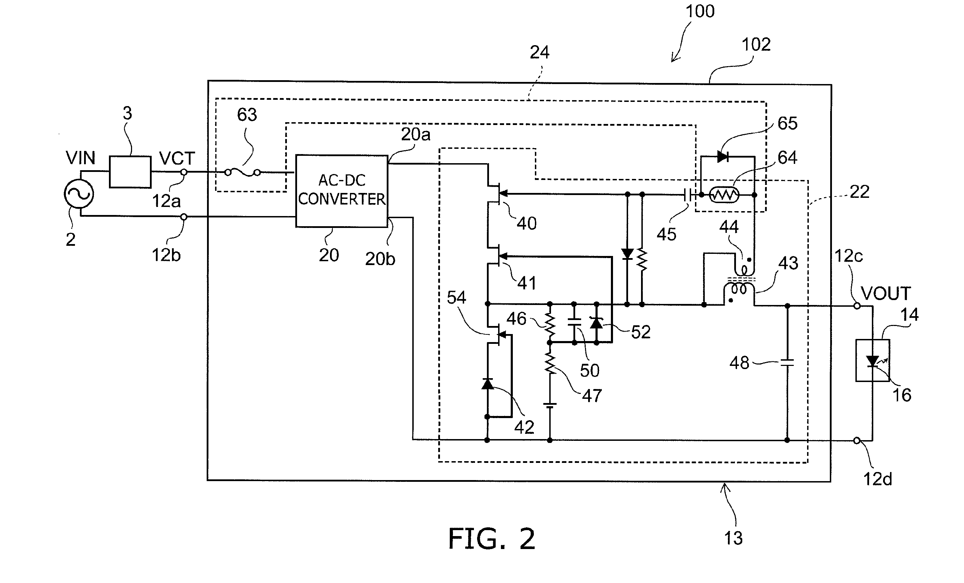

FIG. 2 is a circuit diagram schematically showing a luminaire according to a second embodiment.

As shown in FIG. 2, in a power supply device 102 of a luminaire 100, the protection circuit 24 includes the fuse 63, a thermistor 64 (a temperature sensitive resistance element), and a rectifying element 65.

The thermistor 64 is connected between the feedback winding 44 and the gate of the switching element 40. More specifically, the thermistor 64 is connected between the feedback winding 44 and the coupling capacitor 45. The thermistor 64 has a temperature characteristic for increasing a resistance value according to a temperature rise. The thermistor 64 is a so-called PCT (Positive Temperature Coefficient) thermistor. The temperature sensitive resistance element is not limited to the thermistor and may be an arbitrary element that changes a resistance value according to a change in temperature.

The rectifying element 65 is connected to the thermistor 64 in parallel. The rectifying element 65 is connected with a direction from the coupling capacitor 45 to the feedback winding 44 set as a forward direction.

In the power supply device 102, when an overcurrent flows to the switching element 40 and the current control element 41, the thermistor 64 detects a temperature rise involved in the overcurrent and the resistance of the thermistor 64 rises. Even if the resistance of the thermistor 64 rises, during discharging of the coupling capacitor 45, there is no change because charges flow via the rectifying element 65. On the other hand, during charging of the coupling capacitor 45, a voltage drop occurs because of to the increased resistance value of the thermistor 64 and the gate voltage of the switching element 40 falls. Therefore, the switching element 40 is always in the ON state.

As explained above, when an electric current equal to or larger than the predetermined value flows to the switching element 40 and the current control element 41, the protection circuit 24 changes the resistance value of the thermistor 64 and retains the switching element 40 in the ON state. As the thermistor 64, an element having a temperature characteristic for reducing the resistance value according to a temperature rise may be used. The circuit configuration of the protection circuit 24 including the thermistor 64 may be an arbitrary circuit that can retain the switching element 40 in the ON state.

In the power supply device 102, for example, when the current control element 41 changes to the uncontrolled state and an overcurrent flows, the switching element 40 is always set in the ON state, whereby a larger current flows to the switching element 40 and the current control element 41. Consequently, the fuse 63 is fused and the electric current flowing to the switching element 40 and the current control element 41 is cut off.

As explained above, in the luminaire 100 and the power supply device 102 according to this embodiment, as in the first embodiment, it is possible to suppress damage to the lighting load 14 and the substrate 13 due to an overcurrent and improve safety.

### Third Embodiment

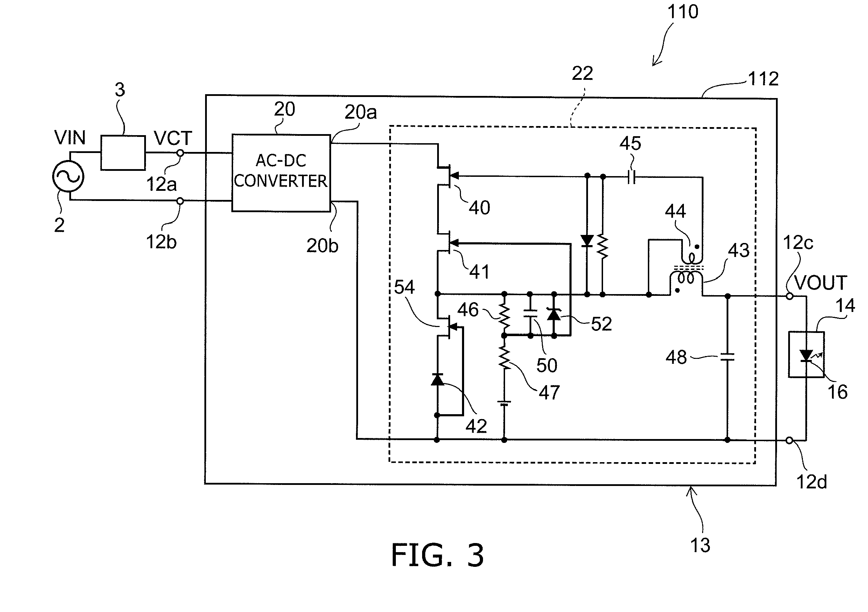

FIG. 3 is a circuit diagram schematically showing a luminaire according to the third embodiment.

As shown in FIG. 3, in a power supply device 112 of a luminaire 110, the protection circuit 24 is omitted. In the power supply device 112, a saturation current value of the current control element 41 is equal to or larger than a maximum rated current of the switching element 40.

In the power supply device 112, for example, when the current control element 41 changes to an uncontrolled state and an overcurrent flows, an electric current exceeding the maximum rated current of the switching element 40 flows to the switching element 40. Consequently, the switching element 40 is broken and the electric current flowing to the switching element 40 and the current control element 41 is cut off.

As explained above, in the luminaire 110 and the power supply device 112 according to this embodiment, as in the first and second embodiments, it is possible to suppress damage to the lighting load 14 and the substrate 13 due to an overcurrent and improve safety.

### Fourth Embodiment

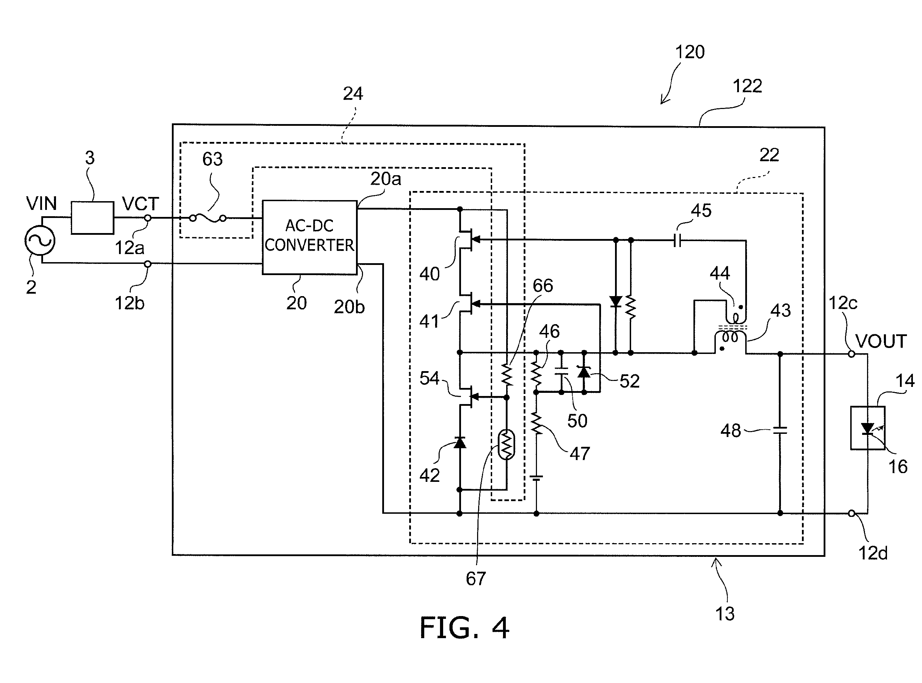

FIG. 4 is a circuit diagram schematically showing a luminaire according to a fourth embodiment.

As shown in FIG. 4, in a power supply device 122 of a luminaire 120, the protection circuit 24 includes the fuse 63, a resistor 66, and a thermistor 67 (a temperature sensitive resistance element).

The resistor 66 is connected between the high-potential terminal 20a and the gate of the semiconductor element 54. The thermistor 67 is connected between the gate of the semiconductor element 54 and the low-potential terminal 20b. Consequently, in the DC-DC converter 22 of the power supply device 122, a voltage obtained by dividing a direct-current voltage output from the AC-DC converter 20 with the resistor 66 and the thermistor 67 is applied to the gate of the semiconductor element 54.

The thermistor 67 has a temperature characteristic for increasing a resistance value according to a temperature rise. The thermistor 67 is a so-called PTC thermistor. The gate voltage of the semiconductor element 54 increases according to an increase in the resistance of the thermistor 67. An electric current flowing between the drain and the source of the semiconductor element 54 increases according to the increase in the resistance of the thermistor 67.

In the power supply device 122, the rectifying element 42 includes silicon. The rectifying element 42 is, for example, a silicon diode. More specifically, the rectifying element 42 is a silicon Schottky barrier diode. The withstand voltage of the rectifying element 42 is larger than an absolute value of a threshold voltage of the gate of the semiconductor element 54 and smaller than an input voltage of the DC-DC converter 22. The input voltage of the DC-DC converter 22 is a direct-current voltage supplied from the AC-DC converter 20. The breakdown voltage in the opposite direction of the rectifying element 42 is larger than the absolute value of the threshold voltage of the gate of the semiconductor element 54 and smaller than the input voltage of the DC-DC converter 22.

In the power supply device 122, for example, when at least one of the switching element 40 and the current control element 41 changes to an uncontrolled state and an overcurrent flows, the thermistor 67 detects a temperature rise involved in the overcurrent and the resistance of the thermistor 67 increases. When the resistance of the thermistor 67 increases, an electric current flowing to the semiconductor element 54 increases and an electric current equal to or larger than the withstand voltage flows to the rectifying element 42. Consequently, the rectifying element 42 is short-circuited and broken. When the rectifying element 42 is short-circuited and broken, an electric current flowing to the switching element 40 and the current control element 41 increases according to a rise of a gate-to-source voltage of the semiconductor element 54 and the short circuit of the rectifying element 42. Consequently, the fuse 63 is fused and the electric current flowing to the switching element 40 and the current control element 41 is cut off.

As explained above, in the luminaire 120 and the power supply device 122 according to this embodiment, as in the first to third embodiments, it is possible to suppress damage to the lighting load 14 and the substrate 13 due to an overcurrent and improve safety.

When the rectifying element 42 is short-circuited and broken, an electric current equal to or larger than a maximum rated current of the switching element 40 may be allowed to flow to the switching element 40 and the current control element 41. In this case, the switching element 40 is broken by the electric current equal to or larger than the maximum rated current. The electric current flowing to the switching element 40 and the current control element 41 is cut off by the breakage of the switching element 40.

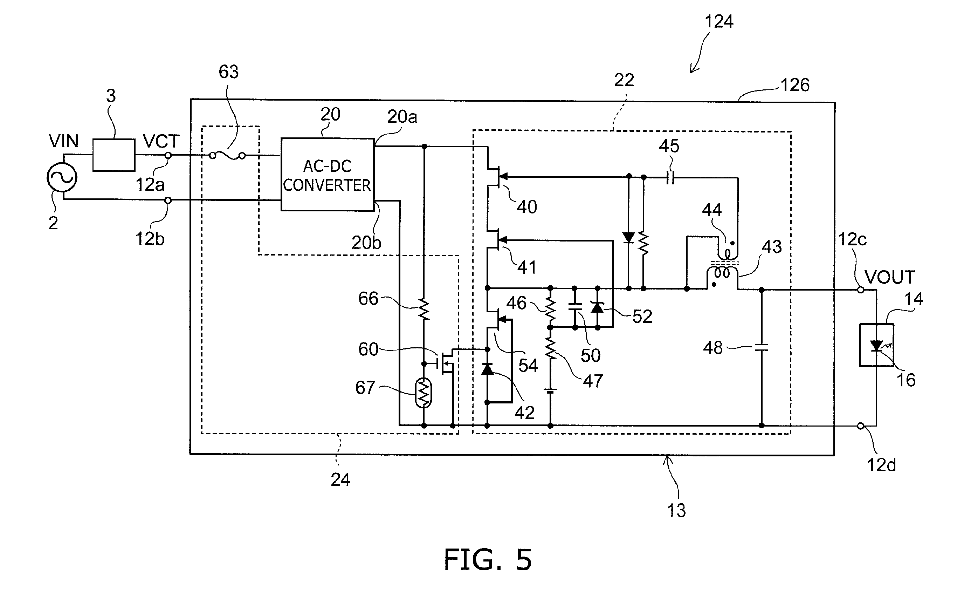

FIG. 5 is a circuit diagram schematically showing another luminaire according to the fourth embodiment.

As shown in FIG. 5, in a luminaire 124 and a power supply device 126, the protection circuit 24 includes the semiconductor element 60, the fuse 63, the resistor 66, and the thermistor 67.

The drain of the semiconductor element 60 is connected between the source of the semiconductor element 54 and the rectifying element 42. The source of the semiconductor element 60 is connected to the low-potential terminal 20b. The resistor 66 is connected between the high-potential terminal 20a and the gate of the semiconductor element 60. The thermistor 67 is connected between the gate of the semiconductor element 60 and the low-potential terminal 20b. As explained above, the thermistor 67 is a PTC thermistor.

A voltage obtained by dividing a direct-current voltage output from the AC-DC converter 20 with the resistor 66 and the thermistor 67 is applied to the gate of the semiconductor element 60. The gate voltage of the semiconductor element 60 increases according to an increase in the resistance of the thermistor 67. When the resistance of the thermistor 67 increases to be equal to or larger than a predetermined value, the semiconductor element 60 transitions from an OFF state to an ON state. When the semiconductor element 60 changes to the ON state, the rectifying element 42 is short-circuited. Consequently, as in the embodiments explained above, a large electric current flows to the switching element 40 and the current control element 41 and the fuse 63 is fused. The electric current flowing to the switching element 40 and the current control element 41 is cut off.

In the luminaire 124 and the power supply device 126 according to this embodiment, as in the embodiments explained above, it is possible to suppress damage to the lighting load 14 and the substrate 13 due to an overcurrent and improve safety. As explained above, the protection circuit 24 may be a circuit that applies a voltage equal to or larger than a withstand voltage to both ends of a silicon diode (the rectifying element 42) or short-circuit the silicon diode using a switch (the semiconductor element 54 or 60) driven using the temperature sensitive resistance element (the thermistor 67), a resistance value of which changes according to temperature. As the temperature sensitive resistance element, an element having a temperature characteristic for reducing a resistance value according to a temperature rise may be used.

### Fifth Embodiment

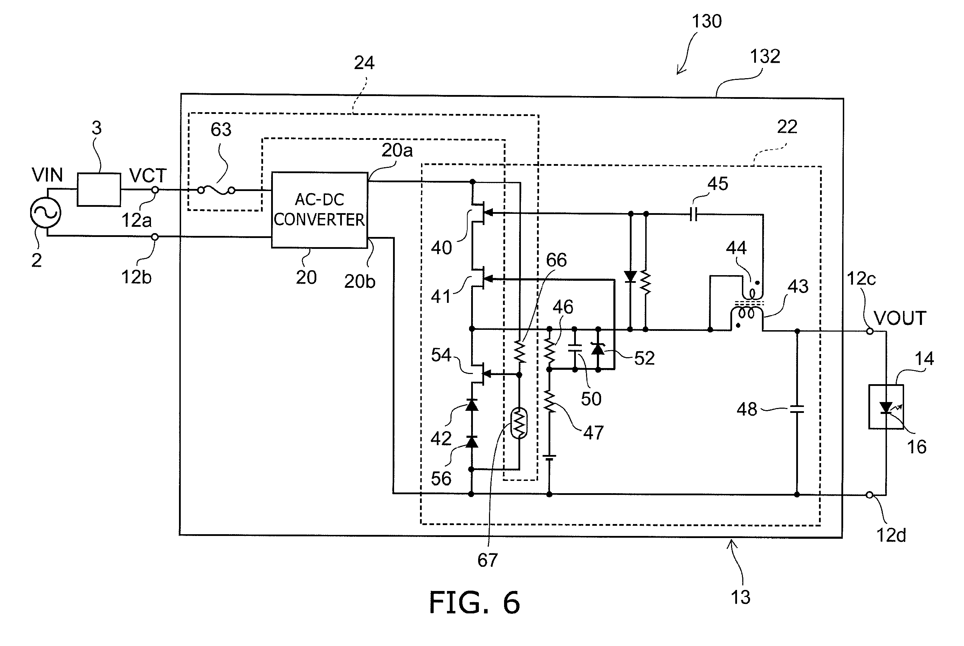

FIG. 6 is a circuit diagram schematically showing a luminaire according to a fifth embodiment.

As shown in FIG. 6, in a power supply device 132 of a luminaire 130, the DC-DC converter 22 further includes a rectifying element 56. The rectifying element 56 is connected between the rectifying element 42 and the low-potential terminal 20b. The rectifying element 56 is connected with a direction from the low-potential terminal 20b to the rectifying element 42 set as a forward direction. That is, in this example, the rectifying element 42 and the rectifying element 56 are connected in series between the semiconductor element 54 and the low-potential terminal 20b. In the power supply device 132, the rectifying elements 42 and 56 include silicon. The rectifying elements 42 and 56 are silicon diodes.

The power supply devices explained in the embodiments are a so-called falling voltage chopper circuit. A switching loss involved in ON and OFF of the switching element 40 can be reduced by causing the falling voltage chopper circuit to operate in an inductor current critical mode. When the junction capacitance of the rectifying element 42 is large, at a point when an electric current of the inductor 43 decreases to zero, the switching element 40 is turned on. Then, an electric current flows from the cathode to the anode in order to charge the junction capacitance of the rectifying element 42. At a point when the junction capacitance is charged to a direct-current voltage supplied from the AC-DC converter 20, the switching element 40 is turned on. Consequently, it is possible to maintain zero current switching.

A load operates with a direct current. A direct-current equivalent to an average of an inductor current flows to the load. For example, when an LED is assumed as the load, in order to fix brightness, that is, in order to fix a direct-current current flowing to the LED, it is possible to perform control for determining timing for turning off the LED such that a peak value of a switching current is fixed.

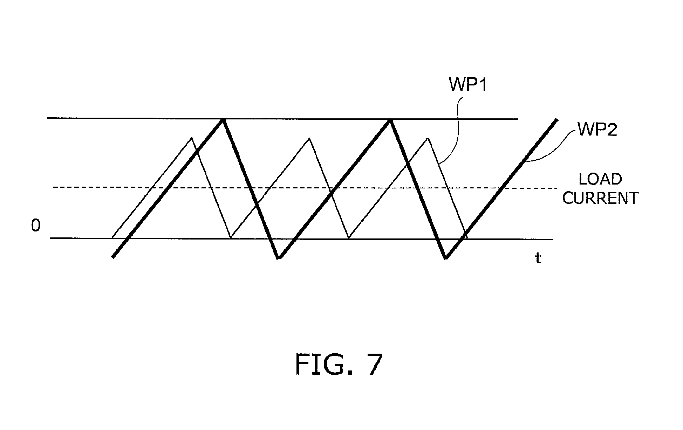

FIG. 7 is a graph showing an example of waveforms of an inductor current.

For example, as shown in FIG. 7, in order to fix a load current, as indicated by a first waveform WP1 represented by a thin line, it is possible to determine, to fixe peaks of a switch current (peaks of the inductor current), timing for turning off a switch element and turn on the switch element at timing when the inductor current is zero. On the other hand, when the junction capacitance of a diode is large, as indicated by a second waveform WP2 represented by a thick line in the figure, an electric current for charging the junction capacitance flows in the opposite direction of an inductor. In this case, in order to equalize the load current, it is necessary to increase the peaks of the switch current. Consequently, a reactive current flowing through a circuit occurs and increases a circuit current. Since the electric current does not contribute to the load, the electric current increases a loss of components through which the electric current flows. This phenomenon appears more conspicuously as a switching frequency is higher.

On the other hand, in the power supply device 132 according to this embodiment, two diodes are connected in series. Consequently, junction capacitances of the two diodes are connected in series. It is possible to equivalently reduce capacitance components present in parallel to the diodes. Therefore, it is possible to reduce an electric current for charging the junction capacitances and complete the charging in a short time. Accordingly, the reactive current flowing through the circuit decreases and the circuit loss can be reduced. It is possible to more effectively reduce the reactive current by controlling ON and OFF of the switching element 40 at a frequency equal to or higher than 100 kHz.

In the power supply device 132, the protection circuit 24 is provided to short-circuit or short-circuit and break the rectifying elements 42 and 56 when an overcurrent flows. Consequently, as explained in the embodiments, for example, the fuse 63 is fused and the electric current flowing to the switching element 40 and the current control element 41 is cut off. Consequently, it is also possible to improve safety. In FIG. 6, as an example, the protection circuit 24 that short-circuits and breaks the rectifying elements 42 and 56 is shown. However, the configuration of the protection circuit 24 may be any one of the configurations in the embodiments. In this example, two rectifying elements 42 and 56 are connected in series. However, the number of rectifying elements connected in series may be three or more.

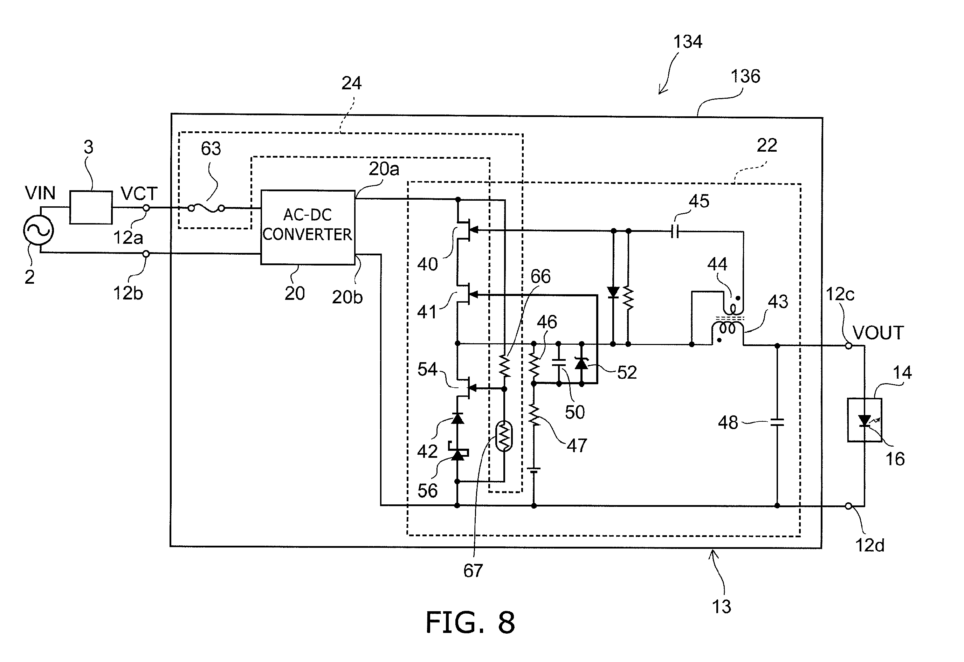

FIG. 8 is a circuit diagram schematically showing another luminaire according to the fifth embodiment.

As shown in FIG. 8, in a power supply device 136 of a luminaire 134, the rectifying element 42 is a high-speed rectifying diode and the rectifying element 56 is a Schottky barrier diode. In order to cause the power supply device 136 to operate at a frequency equal to or higher than 100 kHz, it is necessary to turn on and off a diode at high speed. When an electric current is flowing to the diode in a forward direction, in order to reduce a loss of the diode, a forward voltage is preferably small.

Therefore, in the power supply device 136, the two kinds of diodes are connected in series. The high-speed rectifying diode has small junction capacitance, can be switched at high speed, and has high voltage resistance performance. The Schottky barrier diode can be switched at high speed and has a low forward voltage. Therefore, by connecting the diodes in this way, it is possible to suppress the forward voltage and reduce equivalent junction capacitance without spoiling high-speed switching performance. Accordingly, it is possible to further reduce a reactive current flowing through the circuit and further reduce the circuit loss.

### Sixth Embodiment

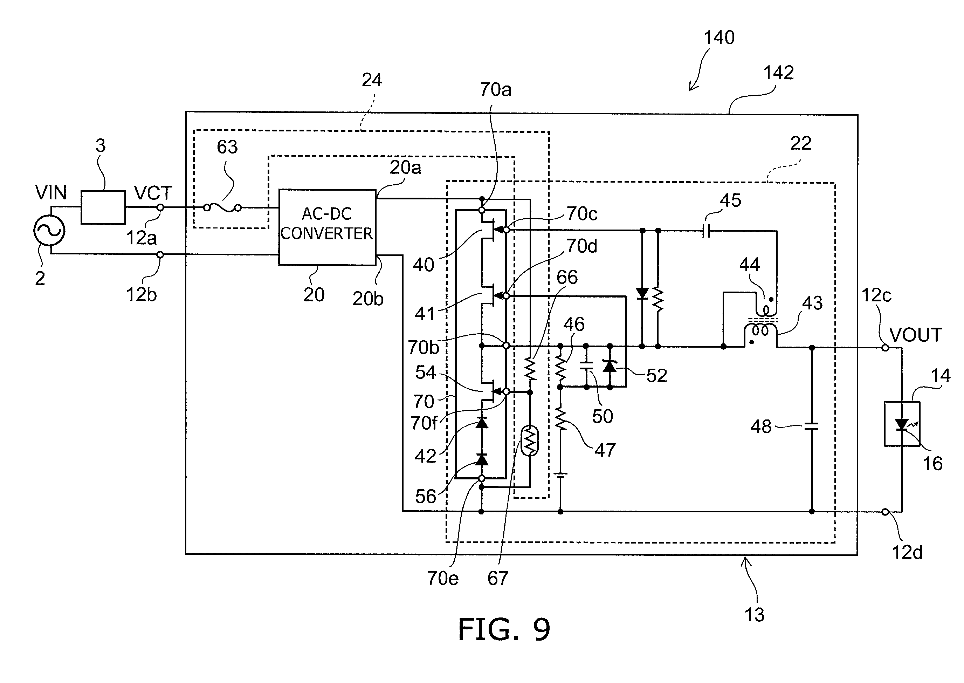

FIG. 9 is a circuit diagram schematically showing a luminaire according to a sixth embodiment.

As shown in FIG. 9, in a power supply device 142 of a luminaire 140, the DC-DC converter 22 further includes an integrated circuit 70. The integrated circuit 70 includes the switching element 40, the current control element 41, the rectifying element 42, the semiconductor element 54, and the rectifying element 56. The integrated circuit 70 is one component obtained by integrating the components as one chip.

The integrated circuit 70 includes first to sixth terminals 70a to 70f. The first terminal 70a is connected to the drain of the switching element 40. The second terminal 70b is connected to the source of the current control element 41. The third terminal 70c is connected to the gate of the switching element 40. The fourth terminal 70d is connected to the gate of the current control element 41. The fifth terminal 70e is connected to the anode of the rectifying element 56. The sixth terminal 70f is connected to the gate of the semiconductor element 54.

In the integrated circuit 70, the semiconductor element 54 and the rectifying element 56 are provided according to necessity and can be omitted. When the rectifying element 56 is omitted, the fifth terminal 70e is connected to the anode of the rectifying element 42.

For example, when the rectifying elements 42 and 56 are configured as external separate components, a terminal provided in a package including a diode chip is necessary. A diode and parasitic capacitance are connected by the terminal. The parasitic capacitance is also connected to the junction capacitance of the diode in parallel. Therefore, a reactive current involved in the connection increases.

On the other hand, in the power supply device 142 according to this embodiment, the integrated circuit 70 is provided and integrated to include the rectifying elements 42 and 56. Consequently, in the power supply device 142, it is possible to reduce the parasitic capacitance. Therefore, it is possible to further reduce the reactive current and further reduce the circuit loss.

The embodiments are explained above with reference to the specific examples. However, various modifications of the embodiments are possible.

For example, the switching element 40 and the current control element 41 are not limited to the GaN-HEMT. For example, the switching element 40 and the current control element 41 may be a semiconductor element formed using, in a semiconductor substrate, a semiconductor having a wide band gap (a wide band gap semiconductor) such as silicon carbide (SiC), gallium nitride (GaN), or diamond. The wide band gap semiconductor refers to a semiconductor having a band gap wider than a band gap of about 1.4 eV of gallium arsenide (GaAs). The wide band gap semiconductor includes semiconductors having band gaps equal to or larger than 1.5 eV such as gallium phosphide (GaP; having a band gap of about 2.3 eV), gallium nitride (GaN; having a band gap of about 3.4 eV), diamond (C; having a band gap of about 5.27 eV), aluminum nitride (AlN; having a band gap of about 5.9 eV), and silicon carbide (SiC). When a withstand voltage is set equal, since the wide band gap semiconductor element can be formed smaller than a silicon semiconductor element, parasitic capacitance is small and a high-speed operation is possible. Therefore, it is possible to reduce a switching cycle and reduce the sizes of a winding component, a capacitor, and the like.

The illumination light source 16 is not limited to the LED and may be, for example, an organic EL (Electro-Luminescence) and an OLED (Organic light-emitting diode). A plurality of the illumination light sources 16 may be connected to the lighting load 14 in series or in parallel.

In the embodiments, the lighting load 14 is described as the direct-current load. However, the direct-current load is not limited to this and may be other direct-current loads such as a heater. In the embodiment, the power supply device used in the luminaire is described as the power supply device. However, the power supply device is not limited to this and may be an arbitrary power supply device corresponding to the direct-current load.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A power supply device (12, 102, 122, 126, 132, 136, 142) comprising:
a DC-DC converter (22) including:
a switching element (40) of a normally on type;
a current control element (41) of the normally on type connected to the switching element (40) in series and configured to control an electric current flowing to the switching element (40); and
a rectifying element (42) connected to the current control element (41) in series.
the DC-DC converter (22) converting, according to ON and OFF of the switching element (40), an input first direct-current voltage into a second-direct current voltage, which has an absolute value different from an absolute value of the first direct-current voltage, and supplying the second direct-current voltage to a load (14); and
a protection circuit (24) configured to cut off, when an electric current equal to or larger than a predetermined value flows to the switching element (40) and the current control element (41), the electric current flowing to the switching element (40) and the current control element (41).

2. The device (12, 126) according to claim 1, wherein the protection circuit (24) detects an output current flowing to the load (14) and short-circuits the rectifying element (42) when the output current is equal to or larger than a predetermined value.

3. The device (102) according to claim 1, wherein
the DC-DC converter (22) further includes:
an inductor (43) connected to the current control element (41) in series; and
a feedback winding (44) magnetically coupled to the inductor (43) and connected to a control terminal of the switching element (40), and
the protection circuit (24) includes a temperature sensitive resistance element (64) connected between the feedback winding (44) and the control terminal of the switching element (40), the protection circuit (24) changing a resistance value of the temperature sensitive resistance element (64) and retaining the switching element (40) in an ON state when an electric current equal to or larger than a predetermined value flows to the switching element (40) and the current control element (41).

4. The device (122, 132, 136, 142) according to claim 1, wherein
the switching element (40) and the current control element (41) include a wide band gap semiconductor,
the rectifying element (42) includes silicon, and
the protection circuit (24) feeds an electric current equal to or larger than a withstand voltage to the rectifying element (42) and short-circuits and breaks the rectifying element (42) when an electric current equal to or larger than a predetermined value flows to the switching element (40) and the current control element (41).

5. A luminaire (10, 100, 120, 124, 130, 134, 140) comprising:
a lighting load (14); and
the power supply device (12, 102, 122, 126, 132, 136, 142) according to any one of claims 1 to 4 configured to supply electric power to the lighting load (14).
